# EUROPÄISCHE PATENTSCHRIFT

(11) **EP 1 359 036 B1**
(45) Veröffentlichungstag und Bekanntmachung des Hinweises auf die Patenterteilung: **30.07.2008**
(21) Anmeldenummer: 03009943.6
(22) Anmeldetag: 30.04.2003
(51) Int. Cl.: B60J 7/02

(54) **Führungschiene für einen Mitnehmer**
Guide rail for driving element
Rail de guidage pour élément d'entraînement

(30) Priorität: 03.05.2002 DE 10219965
(43) Veröffentlichungstag der Anmeldung: 05.11.2003
(73) Patentinhaber: Webasto AG, 82131 Stockdorf (DE)
(72) Erfinder: Langguth, Martin, 82152 Krailling (DE)

(56) Entgegenhaltungen:
- DE-A- 19 732 700
- DE-B- 1 108 578
- DE-C- 4 422 646
- FR-A- 2 771 970

## Beschreibung

Die Erfindung betrifft eine Führungsschiene für einen mit einem bewegbaren Fahrzeugbauteil, insbesondere einem Schiebedachdeckel, gekoppelten und antreibbaren Mitnehmer gemäß dem Oberbegriff des Anspruchs 1.

Aus der DE 44 22 646 C1 ist eine gattungsgemäße Führungsschiene eines Rahmens für Fahrzeugdächer bekannt geworden, an dem ein Deckel für eine Dachöffnung verschiebbar gelagert ist. Der Deckel ist mittels eines Antriebskabels verschiebbar, das in einem an einer Führungsschiene des Rahmens gebildeten Führungskanal geführt ist. Der Führungskanal ist derart gebildet, daß er das Antriebskabel in dessen Axialrichtung wechselweise an unterschiedlichen Seiten umgreift. Der Deckel ist über Gleitschuhe an seitlich an dem Rahmen angebrachten oder ausgebildeten separaten Führungsschienen gelagert, so daß er wahlweise zwischen einer geschlossenen und einer geöffneten Stellung verschiebbar ist. Solche separate Führungsschienen sind z. B. in der DE 28 56 015 A1 offenbart.

Die FR-A-2 771 970 offenbart ein vorderes Querrahmenteil eines Dachrahmens eines Schiebedaches mit zwei Führungskanälen, in denen zwei Antriebskabel verschiebbar aufgenommen sind, die jeweils zu den beiden Längsseiten des Dachrahmens geführt sind und mit einem Deckel des Schiebedaches in Antriebsverbindung sind.

Der Erfindung liegt die Aufgabe zugrunde, eine eingangs genannte Führungsschiene mit einer verbesserten Funktionalität bei vereinfachter Herstellung zu schaffen sowie einen Rahmen mit einer derartigen Führungsschiene anzugeben.

Die Aufgabe wird durch eine Führungsschiene mit den Merkmalen des Anspruchs 1 gelöst. Vorteilhafte Ausgestaltungen der Erfindung sind in den Unteransprüchen angegeben.

Die Führungsschiene mit dem Führungskanal kann mit einem einfachen zweiteiligen Formwerkzeug z. B. im Spritzguß ohne Hinterschneidungen hergestellt werden. Durch die Formung des durchgehenden Schlitzes kann das Antriebselement bzw. Antriebskabel mit dem Mitnehmer verbunden sein, so daß an der Führung für das Antriebselement bzw. das Antriebskabel auch eine Führung für den Mitnehmer, der allgemein ein Gleiter oder ein Schlitten oder dergleichen sein kann, in kompakter Anordnung integriert werden kann. Die Führungsschiene läßt sich auch einstückig an einem Rahmen z. B. eines Schiebedachs integrieren oder sie wird an einem solchen Rahmen nachträglich angebracht.

Die Aufgabe wird auch durch einen Rahmen eines Fahrzeugdaches mit einem bewegbaren Dachteil zum Verschließen oder Freigeben einer Dachöffnung, insbesondere Schiebedachrahmen, mit zumindest einer Führungsschiene gemäß Anspruch 10 gelöst.

Nachfolgend werden Ausführungsbeispiele der Führungsschiene unter Bezugnahme auf die Zeichnung näher erläutert. Es zeigt:
- Fig. 1: in einer Draufsicht eine Führungsschiene mit einem daran verschiebbar gelagerten Mitnehmer;
- Fig. 2: in einer Schnittansicht entlang der Schnittebene A - A in Fig. 1 die Führungsschiene;
- Fig. 3: in einer Schnittansicht entlang der Schnittebene B - B in Fig. 1 die Führungsschiene;
- Fig. 4: in einer Draufsicht eine Ausführungsform der Führungsschiene, die in der Bewegungsebene des Mitnehmers seitwärts gekrümmt verläuft;
- Fig. 5: in einer Draufsicht eine Ausführungsform der Führungsschiene, die in Bewegungsrichtung des Mitnehmers abwärts gekrümmt verläuft; und
- Fig. 6: in einer Draufsicht eine Schiebedacheinheit für ein Fahrzeugdach, die zumindest eine erfindungsgemäße Führungsschiene enthält.

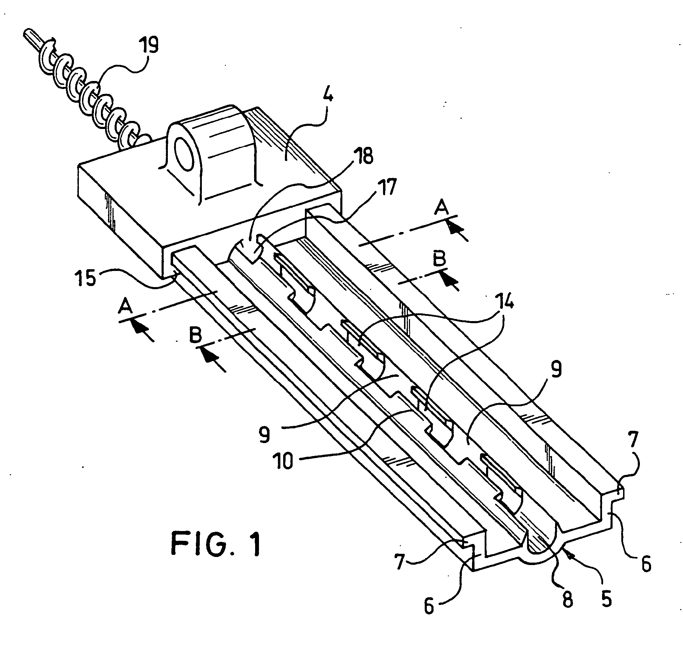

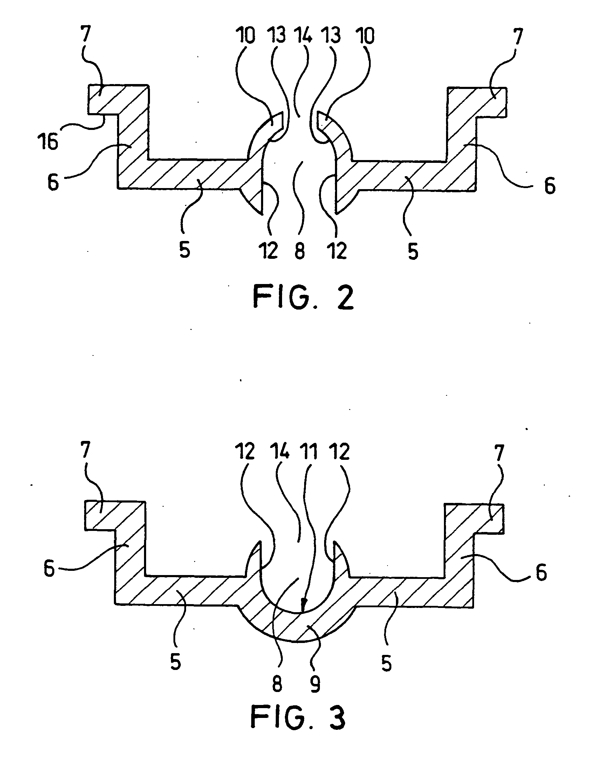

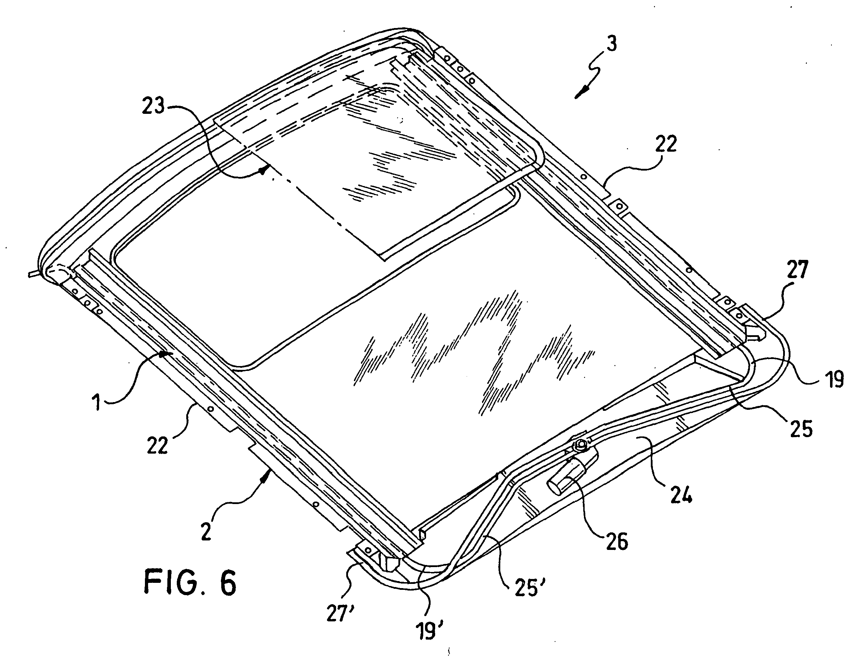

Eine Führungsschiene 1 (siehe Fig. 1 bis 3), die beispielsweise ein Teil eines Rahmens 2 einer Schiebedacheinheit 3 für ein Fahrzeug ist (siehe Fig. 6) und z. B. als Kunststoff-Spritzgußteil oder als Metall-Druckgußteil und insbesondere als Aluminium-Druckgußteil gebildet ist und an der ein Mitnehmer 4 verschiebbar gelagert ist, enthält einen zentralen flachen Mittelabschnitt 5 mit beidseitig angeformten Schenkeln 6, die z. B. rechtwinklig nach oben abstehen und L-förmig abgebogene Schenkelenden 7 aufweisen, die vom Mittelabschnitt 5 nach außen gerichtet sind. Entlang der Führungsschiene 1 ist zentral in dem Mittelabschnitt 5 ein Führungskanal 8 gebildet, der durch sich abwechselnde erste und zweite Wandteile 9 bzw. 10 des Mittelabschnitts 5 gebildet ist. Das erste Wandteil 9 umschließt den Führungskanal 8 (siehe Fig. 3) an seiner Unterseite 11 und an den beiden gegenüberliegenden Seiten 12 und läßt die Oberseite 13 offen, während das zweite Wandteil 10 den Führungskanal 8 (siehe Fig. 2) an den beiden Seiten 12 und an der Oberseite 13 begrenzt und an der Unterseite 11 offen läßt. Die Oberseite 13 des zweiten Wandteils 10 ist jedoch nicht geschlossen, sondern durch einen Schlitz 14 unterbrochen und somit geöffnet. Die Führungsschiene 1 ist demnach derart geformt, daß sie durch ein geteiltes Formwerkzeug mit zwei Formhälften ohne Hinterschneidungen hergestellt werden kann.

Der Mitnehmer 4 ist derart gebildet, daß er entlang der Führungsschiene 1 verschiebbar ist, jedoch in Querrichtung bzw. nach oben an der Führungsschiene 1 gehalten ist. Dazu umgreift der Mitnehmer 4 beispielsweise die beiden Schenkelenden 7 mit einem jeweiligen Halteabschnitt 15, der sich an der unteren Stützfläche 16 der Schenkelenden 7 abstützt. Der Halteabschnitt 15 kann einstückig gebildet sein oder bei der Montage des Mitnehmers 4 an der Führungsschiene 1, wenn dieser z. B. von oben auf die Führungsschiene 1 aufgesetzt wird, nachträglich befestigt werden. Die Kontur bzw. die Unterseite des Mitnehmers 4 kann an die Kontur der Führungsschiene 1 derart angepaßt sein, daß mehrere Führungsoder Gleitflächen gebildet sind als für eine eindeutige Führung des Mitnehmers 4 erforderliche Anzahl erforderlich ist. Der Mitnehmer 4 kann auch mittels Rollenlagerungen an der Führungsschiene 1 gelagert sein. Die dargestellte Führung ist somit beispielhaft und kann auch von an der Führungsschiene 1 unterschiedlich gestalteten Führungsbahnen und Führungsflächen gebildet sein.

Der Mitnehmer 4 enthält des weiteren ein Verbindungsteil 17, das mittels eines Steges 18 mit dem Mitnehmer 4 derart verbunden ist, daß es bei an der Führungsschiene 1 angebrachtem Mitnehmer 4 in dem Führungskanal 8 aufgenommen ist und der Steg 18 bei einer Verschiebung des Mitnehmers 4 sich durch den jeweiligen Schlitz 14 bewegt. An dem Verbindungsteil 17 ist ein an sich bekanntes Antriebskabel 19 für einen Schiebedachdeckel befestigt, das sich ebenfalls durch den Führungskanal 8 erstreckt.

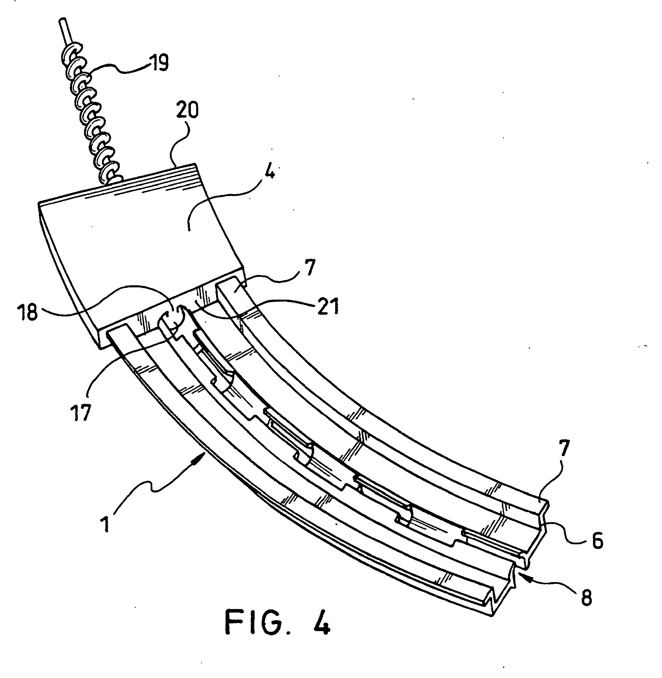

Die in Fig. 4 dargestellte Ausführungsform der Führungsschiene 1 ist mit einer gleichmäßigen Krümmung in der Ebene der Führungsschiene 1 gebildet. Der Mitnehmer 4 besitzt dementsprechend gekrümmte Führungsflächen. Der Mitnehmer 4 kann auch in Bewegungsrichtung so kurz gebildet sein, daß er auch Krümmungen der Führungsschiene 1 mit ungleichmäßigen Krümmungsradien und unterschiedlichen Krümmungsrichtungen folgen kann. Für die Führung in Querrichtung an der Führungsschiene 1 weist der Mitnehmer 4 beispielsweise in Bewegungsrichtung kurz gebildete Führungsabschnitte im Bereich seiner Vorderseite 20 und seiner Hinterseite 21 auf. Zwischen den beiden Führungsabschnitten kann dann eine unterschiedlich starke Krümmung der Führung Platz finden.

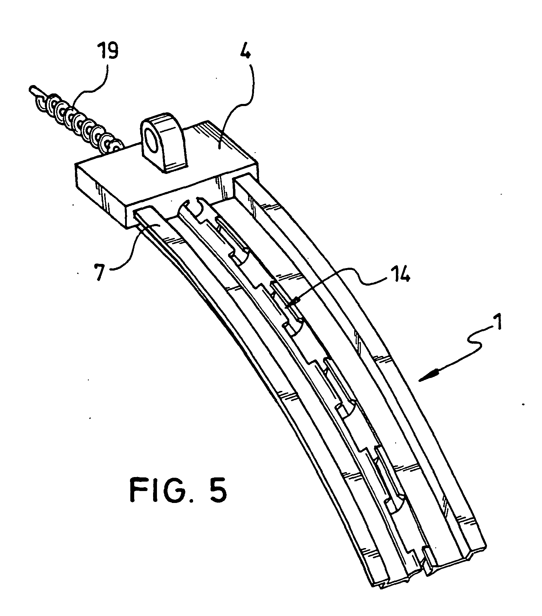

Gemäß einer weiteren Ausführungsform kann die Führungsschiene 1 in Längsrichtung zumindest eine aufwärts und/oder abwärts geformte Krümmung (siehe Fig. 5) aufweisen, so daß konkave und/oder konvexe Bahnverläufe hergestellt werden können. Diese aufwärts und/oder abwärts geformte Krümmung kann auch mit einer seitlichen Krümmung gemäß Fig. 4 überlagert werden (nicht dargestellt).

Die in Fig. 6 dargestellte Schiebedacheinheit 3 enthält an ihren beiden gegenüberliegenden Längsseiten 22 jeweils eine derartige Führungsschiene 1 mit einem daran gelagerten Mitnehmer (in Fig. 6 nicht dargestellt), an dem über jeweilige Verbindungselemente ein Schiebedachdeckel 23 (nur seine rechte Hälfte ist schematisch dargestellt) verschiebbar gelagert ist. Die Schiebedacheinheit 3 weist ein in Kunststoff-Spritzguß einstückig hergestelltes hinteres Querteil 24 auf, das die Kabelkanäle 25 und 25' für das rechte Antriebskabel 19 und das linke Antriebskabel 19', einen Antriebsmotor 26 und die Auslaufkanäle 27 und 27' für die beiden freien Enden der Antriebskabel 19 und 19' enthält. Diese Kabelkanäle sind in der gleichen Art und Weise wie der beschriebene Führungskanal 8 gebildet, erfordern jedoch keinen Schlitz 14, wenn daran nicht gleichzeitig ein Mitnehmer 4 geführt ist.

Die Montage des Antriebskabels 19 kann bei dieser Führungsschiene in einfacher Weise dadurch erfolgen, daß mittels des Mitnehmers 4 das Antriebskabel 19 durch den Führungskanal 8 gezogen wird. Im Stand der Technik werden hingegen die Antriebskabel durch ihre Führungskanäle eingeschoben, wobei große Sorgfalt verwendet werden muß, damit die Gefahr des Ausknickens der Kabel vermieden wird.

Die Führungsschiene mit dem Mitnehmer eignet sich zum Antreiben einer Vielzahl von bewegbaren Fahrzeugteilen wie Klappen, Verschlüsse, Cabriodächer oder Deckel von Schiebedächern und Schiebehebedächern.

### Bezugszeichenliste

- 1: Führungsschiene
- 2: Rahmen
- 3: Schiebedacheinheit
- 4: Mitnehmer
- 5: Mittelabschnitt
- 6: Schenkel
- 7: Schenkelende
- 8: Führungskanal
- 9: erstes Wandteil
- 10: zweites Wandteil
- 11: Unterseite
- 12: Seite
- 13: Oberseite
- 14: Schlitz
- 15: Halteabschnitt
- 16: untere Stützfläche
- 17: Verbindungsteil
- 18: Steg
- 19: Antriebskabel
- 19': Antriebskabel
- 20: Vorderseite
- 21: Hinterseite
- 22: Längsseite
- 23: Schiebedachdeckel
- 24: hinteres Querteil
- 25: Kabelkanal
- 25': Kabelkanal
- 26: Antriebsmotor
- 27: Auslaufkanal
- 27': Auslaufkanal

## Patentansprüche

1. Führungsschiene für ein mit einem bewegbaren Fahrzeugbauteil, insbesondere einem Schiebedachdeckel (23), gekoppelten und antreibbaren Mitnehmer (4),
mit einem Führungskanal (8) zum Aufnehmen eines langgestreckten, axial verschiebbaren Antriebselements (19) und
mit einer Führung (7) zum verschiebbaren Lagern des mit dem Antriebselement (19) verbundenen Mitnehmers (4),
wobei der Führungskanal (8) das Antriebselement (19) in dessen Axialrichtung abwechselnd an unterschiedlichen Seiten umgreift,
**dadurch gekennzeichnet,**
**daß** an einer der Seiten der jeweilige Umgriff von einem durchgehenden Schlitz (14) unterbrochen ist und in dem Schlitz (14) ein das Antriebselement (19) mit dem Mitnehmer (4) verbindendes Verbindungsteil (18) verschiebbar aufgenommen ist.

2. Führungsschiene nach Anspruch 1,
**dadurch gekennzeichnet, daß** der Schlitz (14) auf der dem Mitnehmer (4) zugewandten Seite der Führungsschiene (1) gebildet ist.

3. Führungsschiene nach Anspruch 1 oder 2,
**dadurch gekennzeichnet, daß** der Umgriff kreisbogenförmig gebildet ist und der Schlitz (14) im wesentlichen mittig und symmetrisch am Führungskanal (8) für das Antriebselement (19) gebildet ist.

4. Führungsschiene nach einem der Ansprüche 1 bis 3,
**dadurch gekennzeichnet, daß** der Führungskanal (8) für das Antriebselement (19) mittig an der Führungsschiene (1) gebildet ist.

5. Führungsschiene nach einem der Ansprüche 1 bis 4,
**dadurch gekennzeichnet, daß** die Führungsschiene (1) gerade oder zumindest abschnittsweise ungerade gebildet ist.

6. Führungsschiene nach einem der Ansprüche 1 bis 5,
**dadurch gekennzeichnet, daß** die Führungsschiene (1) in Längsrichtung aufwärts oder abwärts und/oder seitlich gekrümmt ist.

7. Führungsschiene nach einem der Ansprüche 1 bis 6,
**dadurch gekennzeichnet, daß** das Antriebselement (19) ein Gewindekabel ist.

8. Führungsschiene nach einem der Ansprüche 1 bis 7,
**dadurch gekennzeichnet, daß** der Mitnehmer (4) ein mit einem Schiebedachmechanismus gekoppeltes Gleitelement ist.

9. Führungsschiene nach einem der Ansprüche 1 bis 8,
**dadurch gekennzeichnet, daß** die Führungsschiene (1) ein Spritzgussteil ist.

10. Führungsschiene nach Anspruch 9,
**dadurch gekennzeichnet, daß** das Spritzgußteil aus Kunststoff oder aus Metall hergestellt ist.

11. Rahmen eines Fahrzeugdaches mit einem bewegbaren Dachteil zum Verschließen oder Freigeben einer Dachöffnung, insbesondere Schiebedachrahmen, mit zumindest einer Führungsschiene nach einem der Ansprüche 1 bis 10.

12. Rahmen nach Anspruch 11,
**dadurch gekennzeichnet, daß** der Rahmen (2) ein Kunststoff-Spritzgussteil ist und die daran angebrachten Führungsschienen (8) Metall-Spritzgussteile sind.

13. Rahmen nach Anspruch 11,
**dadurch gekennzeichnet, daß** die Führungsschienen (8) einstückig mit dem im Spritzguß gebildeten Rahmen (2) hergestellt sind.

## Claims

1. Guide rail for a driver (4) which is coupled to and can be driven by a movable vehicle component, in particular a sliding roof cover (23),
having a guide channel (8) for holding an elongate, axially movable drive element (19) and having a guide (7) for the movable mounting of the driver (4) which is connected to the drive element (19),
with the guide channel (8) encompassing the drive element (19) in its axial direction in an alternating fashion at different sides,
**characterized**
**in that**, on one of the sides, the respective encompassment is interrupted by a continuous slot (14) and a connecting part (18) which connects the drive element (19) to the driver (4) is held in a movable manner in the slot (14).

2. Guide rail according to Claim 1,
**characterized in that** the slot (14) is formed on that side of the guide rail (1) which faces towards the driver (4).

3. Guide rail according to Claim 1 or 2,
**characterized in that** the encompassment is formed in the shape of a circular arc and the slot (14) is formed substantially centrally and symmetrically on the guide channel (8) for the drive element (19).

4. Guide rail according to one of Claims 1 to 3,
**characterized in that** the guide channel (8) for the drive element (19) is formed centrally on the guide rail (1).

5. Guide rail according to one of Claims 1 to 4,
**characterized in that** the guide rail (1) is of straight design or, at least in sections, of non-straight design.

6. Guide rail according to one of Claims 1 to 5,
**characterized in that** the guide rail (1) is curved upwards or downwards and/or laterally in the longitudinal direction.

7. Guide rail according to one of Claims 1 to 6,
**characterized in that** the drive element (19) is a threaded cable.

8. Guide rail according to one of Claims 1 to 7,
**characterized in that** the driver (4) is a sliding element which is coupled to a sliding roof mechanism.

9. Guide rail according to one of Claims 1 to 8,
**characterized in that** the guide rail (1) is an injection-moulded part.

10. Guide rail according to Claim 9,
**characterized in that** the injection-moulded part is produced from plastic or from metal.

11. Frame of a vehicle roof having a movable roof part for closing off or opening a roof opening, in particular a sliding roof frame, having at least one guide rail according to one of Claims 1 to 10.

12. Frame according to Claim 11,
**characterized in that** the frame (2) is a plastic injection-moulded part and the guide rails (8) which are attached thereto are metal injection-moulded parts.

13. Frame according to Claim 11,
**characterized in that** the guide rails (8) are produced in one piece with the injection-moulded frame (2).

## Revendications

1. Rail de guidage pour un dispositif d'entraînement (4) accouplé à, et pouvant être entraîné par, un composant de véhicule mobile, notamment un couvercle de toit ouvrant (23),
avec un canal de guidage (8) pour recevoir un élément d'entraînement (19) allongé, pouvant coulisser axialement, et
avec une glissière (7) pour supporter de manière déplaçable le dispositif d'entraînement (4) connecté à l'élément d'entraînement (19),
le canal de guidage (8) venant en prise autour de l'élément d'entraînement (19) dans sa direction axiale, en alternance sur des côtés différents,
**caractérisé en ce que**
sur l'un des côtés, l'engagement périphérique respectif est interrompu par une fente continue (14) et une partie de connexion (18) reliant l'élément d'entraînement (19) au dispositif d'entraînement (4) est reçue de manière coulissante dans la fente (14).

2. Rail de guidage selon la revendication 1,
**caractérisé en ce que** la fente (14) est formée sur le côté du rail de guidage (1) tourné vers le dispositif d'entraînement (4).

3. Rail de guidage selon la revendication 1 ou 2,
**caractérisé en ce que** l'engagement périphérique est formé en forme d'arc de cercle et la fente (14) est formée essentiellement centralement et symétriquement sur le canal de guidage (8) pour l'élément d'entraînement (19).

4. Rail de guidage selon l'une quelconque des revendications 1 à 3,
**caractérisé en ce que** le canal de guidage (8) pour l'élément d'entraînement (19) est formé centralement sur le rail de guidage (1).

5. Rail de guidage selon l'une quelconque des revendications 1 à 4,
**caractérisé en ce que** le rail de guidage (1) est formé de manière droite ou au moins partiellement non droite.

6. Rail de guidage selon l'une quelconque des revendications 1 à 5,
**caractérisé en ce que** le rail de guidage (1) est courbé dans la direction longitudinale vers le haut ou vers le bas et/ou latéralement.

7. Rail de guidage selon l'une quelconque des revendications 1 à 6,
**caractérisé en ce que** l'élément d'entraînement (19) est un câble fileté.

8. Rail de guidage selon l'une quelconque des revendications 1 à 7,
**caractérisé en ce que** le dispositif d'entraînement (4) est un élément coulissant accouplé à un mécanisme de toit ouvrant.

9. Rail de guidage selon l'une quelconque des revendications 1 à 8,
**caractérisé en ce que** le rail de guidage (1) est une pièce moulée par injection.

10. Rail de guidage selon la revendication 9,
**caractérisé en ce que** la pièce moulée par injection est fabriquée en plastique ou en métal.

11. Cadre d'un toit de véhicule comprenant une partie de toit mobile pour la fermeture ou l'ouverture d'une ouverture de toit, notamment d'un cadre de toit ouvrant, comprenant au moins un rail de guidage selon l'une quelconque des revendications 1 à 10.

12. Cadre selon la revendication 11,
**caractérisé en ce que** le cadre (2) est une pièce en plastique moulée par injection et les rails de guidage (8) montés sur ce cadre sont des pièces en métal moulées par injection.

13. Cadre selon la revendication 11,
**caractérisé en ce que** les rails de guidage (8) sont fabriqués d'une seule pièce avec le cadre (2) formé par moulage par injection.
